# EUROPEAN PATENT SPECIFICATION

(11) **EP 0 813 363 B1**
(45) Date of publication and mention of the grant of the patent: **04.08.1999**
(21) Application number: 96907180.2
(22) Date of filing: 05.03.1996
(51) Int. Cl.: A01N 43/76

(54) **FUNGICIDAL MIXTURES**
FUNGIZIDE MISCHUNGEN
MELANGES FONGICIDES

(30) Priority: 08.03.1995 US 399059
(43) Date of publication of application: 29.12.1997
(73) Proprietor: E.I. DU PONT DE NEMOURS AND COMPANY, Wilmington Delaware 19898 (US)
(72) Inventor: BERGER, Richard, Alan, Claymont, DE 19703-1107 (US); REAP, James, John, Wilmington, DE 19810-2219 (US)
(74) Representative: Woodman, Derek
(86) International application number: US9602996
(87) International publication number: WO9627290

(56) References cited:
- EP-A- 0 393 911

## Description

### BACKGROUND

This invention pertains to fungicidal mixtures and use thereof, and more particularly to fungicidal mixtures comprising 5-methyl-5-(4-phenoxyphenyl)-3-(phenylamino)-2,4-oxazolidinedione (hereinafter referred to as OAD) and use thereof to control plant disease.

Water-emulsifiable formulations of fungicides having limited solubility characteristics can suffer from undesirable crystallization of the fungicide during long term storage of the water-emulsifiable formulations and/or after extended periods in admixture with water (e.g., in a spray tank). OAD is a known fungicide (see, e.g., U.S. Patent No. 5,223,523). However, OAD has limited solubility in water and in various non-aqueous solvents typically used for forming water-emulsifiable formulations. OAD has proven particularly useful for treatment of diseases in grapes, potatoes and wheat. There is a need for emulsifiable formulations of OAD which are stable to crystallization.

Application of OAD in combination with at least one other fungicide having a different mode of action would be advantageous in providing more effective control of fungal disease and also in preventing the development of resistant pathogens which might readily occur if OAD is used alone. Accordingly, there is interest in developing advantageous fungicidal combinations involving OAD and other fungicides, and especially combinations in which the potential for undesirable OAD crystallization is reduced. Fungicidal triazoles are a known class of fungicides and are recognized for their systemic activity in protecting plants from fungal pathogens.

### SUMMARY OF THE INVENTION

This invention involves advantageous combinations of OAD with fungicidal triazoles. Agriculturally suitable fungicidal compositions comprising OAD and said triazoles are provided by this invention wherein the weight ratio of OAD to said triazole is from about 1:9 to 9:1. This invention further provides a method of treating a locus to control fungal pathogens, comprising (1) preparing an agriculturally suitable water-emulsifiable formulation comprising (a) from 1 to 20% by weight non-crystalline OAD, and (b) a fungicidal triazole; said triazole being present in a weight ratio to OAD between 1:9 and 9:1 which is effective to inhibit crystallization of OAD in said formulation; (2) diluting the formulation in a spray tank with water to form an aqueous mixture containing a combination of OAD and fungicidal triazole in a fungicidally effective amount; and (3) applying the aqueous mixture from the spray tank to the locus.

### DETAILED DESCRIPTION

Crystalline OAD has very low water-solubility, and at normal spray tank dilution particles of OAD have been found to remain substantially undissolved. In some circumstances such as the treatment of wheat septoria, it has also been found that application of an emulsified form of OAD provides substantially better biological control than an equal amount of OAD in a particulate form. However, various attempts to make a commercially viable water-emulsifiable formulation free of undesirable OAD crystallization have been unsuccessful. It has been surprisingly found that the presence of fungicidal triazole, in commercially desirable ratios relative to OAD, inhibits the crystallization of OAD in emulsifiable formulations. Because of mode of action and spectrum of pathogens controlled, fungicidal triazoles are particularly useful mix partners for OAD. Moreover, the excellent curative and systemic activity of the triazole compliments the strong preventive and residual activity of the OAD so that in many circumstances the mixture can provide more effective disease control than either component alone.

OAD can be prepared as described in U.S. Patent No. 5,223,523. Its structure is as a follows:

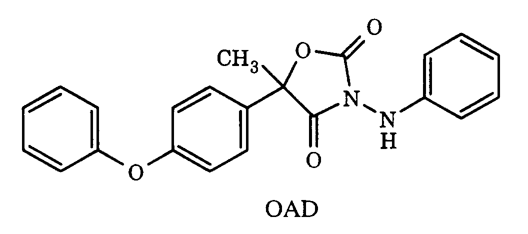

Fungicidal triazoles are characterized by the functionality: 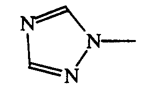 and include bromuconazole, cyproconazole, diclobutrazol, difenoconazole, diniconazole, epoxiconazole, fenbuconazole, flusilazole, flutriafol, hexaconazole, ipconazole, metconazole, myclobutanil, penconazole, probenazole, propiconazole, tebuconazole, tetraconazole, triadimefon, triadimenol, tricyclazole, uniconzole. Fungicidal triazoles are commercially available or can be prepared by known methods.

Normally, the weight ratio of OAD to the fungicidal triazole in the compositions of this invention is from 1:9 to 9:1, preferably is from 1:9 to 3:1, and more preferably is from 1:3 to 3:1. Of note for facilitating preparation of emulsions in water are compositions containing OAD and fungicidal triazole where the OAD is non-crystalline. Typically, non-crystalline OAD is provided by mixing crystalline OAD with suitable non-aqueous solvents and/or surfactants.

The compositions containing OAD and triazole of this invention should be agriculturally suitable. An agriculturally suitable composition means a composition usable for treating agricultural crops itself and/or for preparing a formulation for treatment of agricultural crops. Useful formulations include liquids such as solutions (including emulsifiable concentrates), suspensions, emulsions (including microemulsions and/or suspoemulsions) and the like which optionally can be thickened into gels. Useful formulations further include solids such as dusts, powders, granules, pellets, tablets, films, and the like which can be water-dispersible ("wettable") or water-soluble. The active ingredients can be (micro)encapsulated and further formed into a suspension or solid formulations. Alternatively, the entire formulation of active ingredients can be encapsulated (or "overcoated"). Encapsulation can control or delay release of the active ingredients. Sprayable formulations can be extended in suitable media and used at spray volumes from about one to several hundred liters per hectare. High-strength compositions are primarily used as intermediates for further formulation. Of note are compositions consisting essentially of OAD and fungicidal triazole.

Preferably, the compositions of this invention are in an emulsifiable form. By emulsifiable form it is meant that when admixed with water the composition forms an emulsion. The term emulsion includes microemulsions. Emulsifiable compositions include so-called emulsifiable concentrates (commonly abbreviated ECs), which are mixtures of OAD and triazole plus any formulants and solvents or diluents. Suitable compositions of this invention also include so-called concentrated emulsions (commonly abbreviated EWs) and microemulsion formulations wherein an emulsifiable mixture of OAD and triazole is preemulsified with a small amount of water so that a highly concentrated emulsion is formed. Suitable compositions also include emulsifiable mixtures of OAD and triazole which are adsorbed onto solid carriers. Suitable compositions also include emulsifiable mixtures of OAD and triazole which are microencapsulated. The composition of this invention is typically applied by adding it to a spray tank (wherein it is diluted as necessary with water to the desired spray concentration) and spraying the tank contents onto the locus to be treated.

Compositions of the present invention which are in the form of a water-emulsifiable formulation will typically comprise at least one surfactant. Surfactants include, for example, polyethoxylated alcohols, polyethoxylated alkylphenols, polyethoxylated sorbitan fatty acid esters, dialkysulfosuccinates, alkylsulfates, alkylbenzene sulfonates, organosilicones, N,N-dialkyltaurates, and polyoxyethylene/polyoxy-propylene block copolymers. The surfactants to emulsify the mixture should be matched to the particular composition; and methods of selecting suitable surfactants for this purpose are well known in the art.

Compositions of the present invention which are in the form of a water-emulsifiable formulation will typically comprise at least one non-aqueous solvent. Non-aqueous solvents include, for example, N,N-dimethylformamide, dimethyl sulfoxide, N-alkylpyrrolidone, ethylene glycol, propylene glycol, propylene carbonate, polypropylene glycol, paraffins, alkylbenzenes, alkylnaphthalenes, oils of olive, castor, linseed, tung, sesame, corn, peanut, cotton-seed, soybean, rape-seed and coconut, fatty acid esters, ketones (e.g., cyclohexanone, 2-heptanone, isophorone and 4-hydroxy-4-methyl-2-pentanone) and alcohols (e.g., methanol, ethanol, propanol, isopropanol, cyclohexanol, decanol, benzyl alcohol and tetrahydrofurfuryl alcohol). OAD has better solubility in more polar solvents such as propylene carbonate and N-alkylpyrrolidones. The solvent can be a mixture of two or more solvents. Of note are a mixture including N-octylpyrrolidone and N-methylpyrrolidone; a mixture including N-octylpyrrolidone, N-methylpyrrolidone and methyl soyate; a mixture including methyl soyate and propylene glycol; a mixture including methyl soyate, propylene glycol and propylene carbonate; and a mixture including methyl soyate and dimethyl ester of glutaric acid.

Liquid emulsifiable formulations can generally be made by simply mixing the components together. To assist in the rate of dissolution, the mixture can be heated, subjected to high shear, or both. Useful commercial emulsifiable formulations prepared in accordance with this invention typically emulsify readily, and also remain emulsified on standing for extended periods (more than about 12 hours) in a spray tank. These formulations are also preferably stable in storage from chemical degradation and irreversible crystallization. Particularly useful compositions of this invention include compositions in the form of water-emulsifiable formulations comprising from 1 to 20 percent by weight non-crystalline OAD, at least one surfactant and at least one non-aqueous solvent; wherein the fungicidal triazole is present in an amount effective to inhibit crystallization of the OAD. Of note are embodiments which are essentially water-free.

To control plant disease, the water-emulsifiable formulations of the present invention are typically diluted with water in a spray tank to the desired fungicidally effective combination of OAD and triazole, and the resulting mixture sprayed onto the crop to be protected.

Practice of the invention will become further apparent from the following non-limiting examples.

### EXAMPLES

Emulsifiable concentrate formulations of Examples 1 through 7 and Comparative Examples A, B and C are prepared as summarized in Table I. The ingredients for the Examples are identified more fully in Table II.

**Table I**

| Weight Percent of Ingredients | | | | | |
|---|---|---|---|---|---|
| Ingredients | Ex. 1 | Ex. A | Ex. B | Ex. 2 | Ex. 3 |
| OAD | 10.2 | -- | 10.2 | 10.2 | 10.2 |
| Flusilazole | 17.4 | 17.4 | -- | 17.2 | 17.2 |
| NOP | 10 | 11.4 | 12.4 | 23.3 | -- |
| NMP | 5 | 5.7 | 6.2 | 11.7 | -- |
| Methyl soyate | 19.9 | 22.7 | 24.7 | -- | 5 |
| Pluronic^{®} L61 | 29.5 | 33.7 | 36.6 | 29.6 | 25.2 |
| Soprophor^{®} 796P | 8 | 9.1 | 9.9 | 8 | 25.2 |
| Propiconazole | -- | -- | -- | -- | -- |
| Propylene glycol | -- | -- | -- | -- | 17.2 |

| Stepan Sprayer Test | | | | | |
|---|---|---|---|---|---|
| +80 mesh retain (mg) | 9.3 | 0.8 | 22.9 | 1.9 | 1.0 |

| Ingredients | Ex. C | Ex. 4 | Ex. 5 | Ex. 6 | Ex. 7 |
|---|---|---|---|---|---|
| OAD | 10.2 | 10.2 | 13.8 | 9.5 | 9.7 |
| Flusilazole | -- | -- | 15.5 | 10.5 | 10.8 |
| Methyl soyate | 6.2 | 5 | 2.5 | 6 | 2.6 |
| Pluronic^{®} L61 | 31.16 | 25.2 | 30 | 30 | 31 |
| Soprophor^{®} 796P | 31.16 | 25.2 | 11 | 12.5 | 10 |
| Propiconazole | -- | 17.2 | -- | -- | -- |
| Propylene glycol | 21.28 | 17.2 | 2.5 | 8.3 | -- |
| Dibasic ester #5 | | | -- | -- | 28.4 |
| PEG 200 Dilaurate | | | -- | -- | 7.5 |
| Propylene carbonate | | | 25 | 23.2 | -- |

| Stepan Sprayer Test | | | | | |
|---|---|---|---|---|---|
| +80 mesh retain (mg) | 7.7 | 2.3* | 2.0 | 2.3 | 1.3 |

| | | | | | |
|---|---|---|---|---|---|
| *This Stepan Test uses only half the normal sample size (5 rather than 10 mL). | | | | | |

**Table II**

| Identity and Source of Ingredients. |
|---|
| Flusilazole: triazole fungicide (DuPont) |
| Propaconazole: triazole fungicide (Chem Services, Inc.) |
| Propylene carbonate: solvent (Huntsman Corp.) |
| Methyl soyate: solvent (Henkel) |
| Propylene glycol: solvent (Fisher) |
| Pluronic^{®} L61: EO/PO block copolymer surfactant (BASF) |
| Soprophor^{®} 796P: EO/PO-tristyrylphenol (Rhone-Poulenc) |
| NMP: N-methylpyrolidone, solvent (ISP) |
| NOP: N-octylpyrolidone, solvent/surfactant (ISP) |
| Dibasic Ester No. 5: Solvent, dimethyl ester of glutaric acid (DuPont) |
| PEG dilaurate: polyethoxylated glycol surfactant (Henkel) |

Samples are prepared by mixing the ingredients together, typically in a 2 oz. glass bottle, and homogenizing the mixture with a Polytron PT3000 dispersator (10 mm probe at about 10,000 to 20,000 rpm) for 15 minutes or until the mixture becomes clear. During mixing with the dispersator, the temperature of the mixture typically rises, but not above about 80°C. The mixture is allowed to cool to room temperature. Examples 1 through 7 remain clear and free of solids.

Comparative Examples A and B relate directly to Example 1. Example A has the formulation of Example 1 wherein the OAD is omitted and replaced by additional formulants in proportion to their concentration in Example 1. Example B has the formulation of Example 1 wherein flusilazole is omitted and replaced by additional formulants in proportion to their concentration in Example 1. Comparative Example C relates directly to Example 4. In Example C, the propiconazole is omitted and replaced by formulants in proportion to their concentration in Example 4.

When stored for about 6 months at ambient temperature in a sealed vial, Examples 3 and 4 continue to be free of crystals as judged by visual inspection of the vial. In contrast, Example C shows a large amount of crystals. When stored at -6 °C for 48 hr Examples 3 and 4 continue to be free of crystals. Examples 1 and B are both free of crystals when stored for 6 months at ambient temperature; however, when stored a -6°C for 48 hr, Example B gives crystals whereas Example 1 continues to be free of crystals. The crystals in Example B which form at -6°C redissolve when warmed back up to room temperature.

Crystallization behavior from spray solutions is studied using a laboratory Stepan^{®} Sprayer described in U.S. Patent No. 4,347,742, fitted with an 80 mesh (177 micron) in-line stainless steel screen. A 10 mL sample of formulation is mixed with 2 L of 5°C tap water in the sprayer reservoir. The mixture is agitated in the reservoir for 30 min by means of the recirculation pump operated at 40 psi. The mixture is then emptied from the reservoir into a glass container which is stored and sealed at ambient temperature for 24 h. After standing undisturbed for 24 h, the mixture is returned to the spray tank reservoir and recirculated again for 15 min at 5°C and 40 psi pump pressure. The sprayer contents are then sprayed out and in doing so all of the mixture passes through the in-line screen. Solids greater than 80 mesh are captured by the in-line screen which is subsequently removed from the sprayer, air dried and weighed. The net weight of residue is determined by difference from a previously measured tare weight of the clean screen. The residue on the screen, which is a crystalline solid, is considered to be entirely OAD. Test results are summarized in Table I.

The Stepan^{®} Sprayer Test results in Table I illustrate that the comparative examples without triazole deposit substantially higher amounts of OAD crystals than the related examples containing triazole. (Note: the retains from Example 4 are doubled for comparison purposes because only half the normal amount of test sample is used in the sprayer for that Example.)

Greenhouse tests illustrating the control efficacy of the present compositions on wheat glume blotch (*Septoria nodorum*), one of many pathogens controlled by the compositions of this invention, are summarized in Table III. Samples of formulation are admixed with purified water at the indicated concentrations and the mixtures are sprayed at the equivalent of 935 L/ha on flag leaves of six-week-old wheat plants (*Triticum aestivum* 'Fremont'). Evaluation of disease control is made at various points, as indicated.

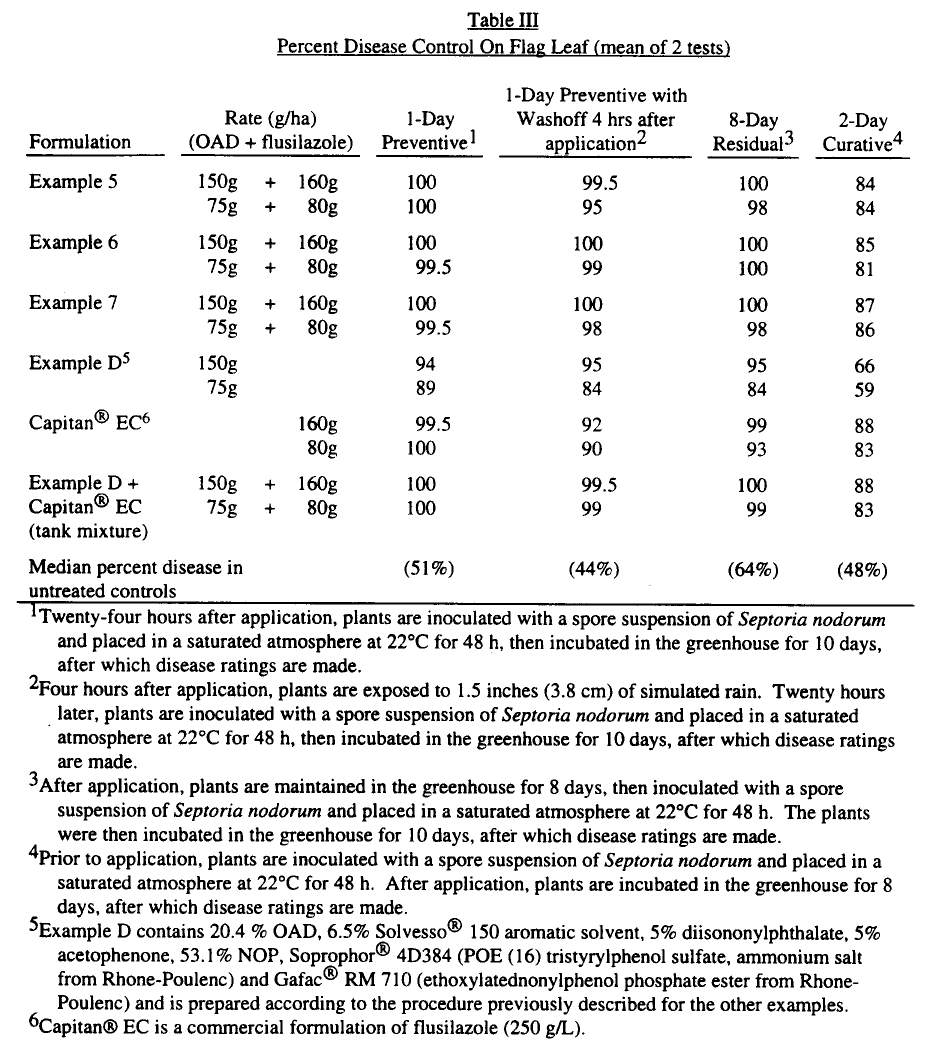

It will be recognized by those skilled in the art that even where the results illustrated using a combination of OAD and triazole are roughly comparable to results illustrated using a similar total amount of one of these ingredients, the use of the combination provides fungal control in an advantageous manner that provides both triazole systemic action and OAD residual activity.

## Claims

1. An agriculturally suitable fungicidal composition, comprising:
(a) 5-methyl-5-(4-phenoxyphenyl)-3-(phenylamino)-2,4-oxazolidinedione; and
(b) a fungicidal triazole; wherein the weight ratio of 5-methyl-5-(4-phenoxyphenyl)-3-(phenylamino)-2,4-oxazolidinedione to said fungicidal triazole is from about 1:9 to 9:1.

2. The composition of Claim 1 wherein the fungicidal triazole is selected from the group consisting of bromuconazole, cyproconazole, diclobutrazol, difenoconazole, diniconazole, epoxiconazole, fenbuconazole, flusilazole, flutriafol, hexaconazole, ipconazole, metconazole, myclobutanil, penconazole, probenazole, propiconazole, tebuconazole, tetraconazole, triadimefon, triadimenol, tricyclazole, uniconzole and mixtures thereof.

3. The composition of Claim 1 which is in the form of a water-emulsifiable formulation including from 1 to 20 percent by weight non-crystalline 5-methyl-5-(4-phenoxyphenyl)-3-(phenylamino)-2,4-oxazolidinedione, at least one non-aqueous solvent and at least one surfactant; wherein the fungicidal triazole is present in an amount effective to inhibit the crystallization of the 5-methyl-5-(4-phenoxyphenyl)-3-(phenylamino)-2,4-oxazolidinedione.

4. The composition of Claim 3 wherein the non-aqueous solvent is selected from the group consisting of N,N-dimethylformamide, dimethyl sulfoxide, N-alkylpyrrolidone, ethylene glycol, propylene glycol, propylene carbonate, polypropylene glycol, paraffins, alkylbenzenes, alkylnaphthalenes, oils of olive, castor, linseed, tung, sesame, corn, peanut, cotton-seed, soybean, rape-seed and coconut, fatty acid esters, ketones, alcohols and mixtures thereof.

5. The composition of Claim 3 wherein the surfactant is selected from the group consisting of polyethoxylated alcohols, polyethoxylated alkylphenols, polyethoxylated sorbitan fatty acid esters, dialkysulfosuccinates, alkylsulfates, alkylbenzene sulfonates, organosilicones, N,N-dialkyltaurates, polyoxyethylene/polyoxy-propylene block copolymers and mixtures thereof.

6. The composition of Claim 3 which is essentially water-free.

7. The composition of Claim 1 consisting essentially of 5-methyl-5-(4-phenoxyphenyl)-3-(phenylamino)-2,4-oxazolidinedione, a fungicidal triazole selected from the group consisting of bromuconazole, cyproconazole, diclobutrazol, difenoconazole, diniconazole, epoxiconazole, fenbuconazole, flusilazole, flutriafol, hexaconazole, ipconazole, metconazole, myclobutanil, penconazole, probenazole, propiconazole, tebuconazole, tetraconazole, triadimefon, triadimenol, tricyclazole, uniconzole and mixtures thereof, at least one non-aqueous solvent and at least one surfactant.

8. The composition of Claim 1 wherein the fungicidal triazole is flusilazole.

9. A method of treating a locus to control fungal pathogens, comprising:
(1) preparing an agriculturally suitable water-emulsifiable formulation comprising (a) from 1 to 20% by weight non-crystalline 5-methyl-5-(4-phenoxyphenyl)-3-(phenylamino)-2,4-oxazolidinedione, and (b) a fungicidal triazole; said triazole being present in a weight ratio to 5-methyl-5-(4-phenoxyphenyl)-3-(phenylamino)-2,4-oxazolidinedione between 1:9 and 9:1 which is effective to inhibit crystallization of 5-methyl-5-(4-phenoxyphenyl)-3-(phenylamino)-2,4-oxazolidinedione in said formulation;
(2) diluting the formulation in a spray tank with water to form an aqueous mixture containing a combination of 5-methyl-5-(4-phenoxyphenyl)-3-(phenylamino)-2,4-oxazolidinedione and fungicidal triazole in a fungicidally effective amount; and
(3) applying the aqueous mixture from the spray tank to the locus.

10. The method of Claim 9 wherein the aqueous mixture from the spray tank is applied to wheat plants; and wherein the aqueous mixture contains a combination of 5-methyl-5-(4-phenoxyphenyl)-3-(phenylamino)-2,4-oxazolidinedione and fungicidal triazole in an amount effective to control wheat glume blotch.

## Patentansprüche

1. Landwirtschaftlich geeignete fungizide Zusammensetzung, aufweisend:
(a) 5-Methyl-5-(4-phenoxyphenyl)-3-(phenylamino)-2,4-oxazolidindion; und
(b) ein fungizides Triazol; wobei das Gewichtsverhältnis von 5-Methyl-5-(4-phenoxyphenyl)-3-(phenylamino)-2,4-oxazolidindion zu dem fungiziden Triazol von etwa 1:9 bis 9:1 beträgt.

2. Zusammensetzung gemäß Anspruch 1, wobei das fungizide Triazol aus der Gruppe, bestehend aus Bromuconazol, Cyproconazol, Diclobutrazol, Difenoconazol, Diniconazol, Epoxiconazol, Fenbuconazol, Flusilazol, Flutriafol, Hexaconazol, Ipconazol, Metconazol, Myclobutanil, Penconazol, Probenazol, Propiconazol, Tebuconazol, Tetraconazol, Triadimefon, Triadimenol, Tricyclazol, Uniconzol und Gemischen davon, ausgewählt ist.

3. Zusammensetzung gemäß Anspruch 1, die sich in der Form einer in Wasser emulgierbaren Zubereitung befindet, einschließend 1 bis 20 Gewichtsprozent nichtkristallines 5-Methyl-5-(4-phenoxyphenyl)-3-(phenylamino)-2,4-oxazolidindion, mindestens ein nichtwäßriges Lösungsmittel und mindestens einen oberflächenaktiven Stoff; wobei das fungizide Triazol in einer zur Verhinderung der Kristallisation des 5-Methyl-5-(4-phenoxyphenyl)-3-(phenylamino)-2,4-oxazolidindions wirksamen Menge vorhanden ist.

4. Zusammensetzung gemäß Anspruch 3, wobei das nichtwäßrige Lösungsmittel aus der Gruppe, bestehend aus N,N-Dimethylformamid, Dimethylsulfoxid, N-Alkylpyrrolidon, Ethylenglycol, Propylenglycol, Propylencarbonat, Polypropylenglycol, Paraffinen, Alkylbenzolen, Alkylnaphthalinen, Ölen aus Olive, Rizinus, Leinsamen, Tung, Sesam, Mais, Erdnuß, Baumwollsamen, Sojabohne, Rübsamen und Kokosnuß, Fettsäureestern, Ketonen, Alkoholen und Gemischen davon, ausgewählt ist.

5. Zusammensetzung gemäß Anspruch 3, wobei der oberflächenaktive Stoff aus der Gruppe, bestehend aus polyethoxylierten Alkoholen, polyethoxylierten Alkylphenolen, polyethoxylierten Sorbitanfettsäureestern, Dialkylsulfosuccinaten, Alkylsulfaten, Alkylbenzolsulfonaten, Organosiliconen, N,N-Dialkyltauraten, Polyoxyethylen/Polyoxypropylen-Blockcopolymeren und Gemischen davon, ausgewählt ist.

6. Zusammensetzung gemäß Anspruch 3, die im wesentlichen wasserfrei ist.

7. Zusammensetzung gemäß Anspruch 1, bestehend im wesentlichen aus 5-Methyl-5-(4-phenoxyphenyl)-3-(phenylamino)-2,4-oxazolidindion, einem fungiziden Triazol, ausgewählt aus der Gruppe, bestehend aus Bromuconazol, Cyproconazol, Diclobutrazol, Difenoconazol, Diniconazol, Epoxiconazol, Fenbuconazol, Flusilazol, Flutriafol, Hexaconazol, Ipconazol, Metconazol, Myclobutanil, Penconazol, Probenazol, Propiconazol, Tebuconazol, Tetraconazol, Triadimefon, Triadimenol, Tricyclazol, Uniconzol und Gemischen davon, mindestens einem nichtwäßrigen Lösungsmittel und mindestens einem oberflächenaktiven Stoff.

8. Zusammensetzung gemäß Anspruch 1, wobei das fungizide Triazol Flusilazol ist.

9. Verfahren zur Behandlung einer Örtlichkeit, um pilzliche Krankheitserreger zu bekämpfen, aufweisend:
(1) Herstellen einer landwirtschaftlich geeigneten, wasseremulgierbaren Zubereitung, umfassend (a) 1 bis 20 Gew.-% nichtkristallines 5-Methyl-5-(4-phenoxyphenyl)-3-(phenylamino)-2,4-oxazolidindion und (b) ein fungizides Triazol; wobei das Triazol in einem Gewichtsverhältnis zu 5-Methyl-5-(4-phenoxyphenyl)-3-(phenylamino)-2,4-oxazolidindion zwischen 1:9 und 9:1 vorhanden ist, das wirksam die Kristallisation von 5-Methyl-5-(4-phenoxyphenyl)-3-(phenylamino)-2,4-oxazolidindion in der Zubereitung verhindert;
(2) Verdünnen der Zubereitung in einem Sprühtank mit Wasser zur Erzeugung eines wäßrigen Gemisches, enthaltend eine Kombination von 5-Methyl-5-(4-phenoxyphenyl)-3-(phenylamino)-2,4-oxazolidindion und fungizidem Triazol in einer fungizid wirksamen Menge; und
(3) Aufbringen des wäßrigen Gemisches aus dem Sprühtank auf die Örtlichkeit.

10. Verfahren nach Anspruch 9, wobei das wäßrige Gemisch aus dem Sprühtank auf Weizenpflanzen aufgebracht wird; und wobei das wäßrige Gemisch eine Kombination von 5-Methyl-5-(4-phenoxyphenyl)-3-(phenylamino)-2,4-oxazolidindion und fungizidem Triazol in einer zur Bekämpfung von Weizenspelzeflecken wirksamen Menge enthält.

## Revendications

1. Une composition fongicide appropriée pour l'agriculture, comprenant :
(a) la 5-méthyl-5-(4-phénoxyphényl)-3-(phénylamino)-2,4-oxazolidinedione ; et
(b) un triazole fongicide, dans laquelle le rapport en poids de la 5-méthyl-5-(4-phénoxyphényl)-3-(phénylamino)-2,4-oxazolidinedione audit triazole fongicide est d'environ 1/9 à 9/1.

2. La composition selon la revendication 1, dans laquelle le triazole fongicide est choisi dans le groupe consistant en bromuconazole, cyproconazole, diclobutrazole, difénoconazole, diniconazole, epoxyconazole, fenbuconazole, flusilazole, flutriafol, hexaconazole, ipconazole, metconazole, myclobutanyle, penconazole, probénazole, propiconazole, tébuconazole, tétraconazole, triadiméfon, triadiménol, tricylazole, uniconzole et leurs mélanges.

3. La composition selon la revendication 1, qui se trouve sous la forme d'une formulation émulsifiable dans l'eau comprenant de 1 à 20 % en poids de 5-méthyl-5-(4-phénoxyphényl)-3-(phénylamino)-2,4-oxazolidinedione non cristalline, au moins un solvant non aqueux et au moins un agent tensioactif, dans laquelle le triazole fongicide est présent en une quantité efficace pour inhiber la cristallisation de la 5-méthyl-5-(4-phénoxyphényl)-3-(phénylamino)-2,4-oxazolidinedione.

4. La composition selon la revendication 3, dans laquelle le solvant non aqueux est choisi dans le groupe consistant en N,N-diméthylformamide, diméthylsulfoxyde, N-alkylpyrrolidone éthylène-glycol, propylèneglycol, carbonate de propylène, polypropylèneglycol paraffines, alkylbenzènes, alkylnaphtalènes, huile d'olive, huile de ricin, huile de graines de lin, huile d'abrasin, huile de sésame, huile de maïs, huile d'arachide, huile de graines de coton, huile de graines de soja, huile de pépins de raisin et huile de noix de coco, esters d'acide gras, cétones, alcools et leurs mélanges.

5. La composition selon la revendication 3, dans laquelle l'agent tensioactif est choisi dans le groupe consistant en alcools polyéthoxylés, alkylphénols polyéthoxylés, esters d'acides gras de sorbitan polyéthoxylés, alkylsulfates, alkylbenzène sulfonates, organosilicones, N,N-dialkyltaurates, copolymères séquencés polyoxyéthylène/polyoxypropylène et leurs mélanges.

6. La composition selon la revendication 3 qui est sensiblement exempte d'eau.

7. La composition selon la revendication 1, consistant essentiellement en 5-méthyl-5-(4-phénoxyphényl)-3-(phénylamino)-2,4-oxazolidinedione, un triazole fongicide choisi dans le groupe consistant en bromuconazole, cyproconazole, diclobutrazole, difénoconazole, diniconazole, epoxyconazole, fenbuconazole, flusilazole, flutriafol, hexaconazole, ipconazole, metconazole, myclobutanyle, penconazole. probénazole, propiconazole, tébuconazole, tétraconazole, triadiméfon, triadiménol, tricylazole, uniconzole et leurs mélanges, et au moins un solvant non aqueux et au moins un agent tensioactif.

8. La composition selon la revendications 1, dans laquelle le triazole fongicide est le flusilazole.

9. Un procédé de traitement d'un lieu pour contrôler des agents pathogènes fongiques comprenant :
(1) la préparation d'une formulation émulsifiable dans l'eau appropriée pour l'agriculture comprenant :
(a) de 1 à 20 % en poids de 5-méthyl-5-(4-phénoxyphényl)-3-(phénylamino)-2,4-oxazolidinedione non cristalline, et
(b) un triazole fongicide ; ledit triazole étant présent dans un rapport pondéral vis-à-vis de la 5-méthyl-5-(4-phénoxyphényl)-3-(phénylamino)-2,4-oxazolidinedione compris entre 1/9 et 9/1 qui est efficace pour inhiber la cristallisation de la 5-méthyl-5-(4-phénoxyphényl)-3-(phénylamino)-2,4-oxazolidinedione dans ladite formulation ;
(2) la dilution de la formulation dans un réservoir de pulvérisation à l'aide d'eau pour former un mélange aqueux contenant une combinaison de 5-méthyl-5-(4-phénoxyphényl)-3-(phénylamino)-2,4-oxazolidinedione et de triazole fongicide en une quantité efficace en tant que fongicide ; et
(3) l'application de ce mélange aqueux à partir du tank de pulvérisation sur le lieu à traiter.

10. Le procédé selon la revendication 9, dans lequel le mélange aqueux provenant du réservoir de pulvérisation est appliqué sur des plans de blé ; et dans lequel le mélange aqueux contient une combinaison de 5-méthyl-5-(4-phénoxyphényl)-3-(phénylamino)-2,4-oxazolidinedione et de triazole fongicide en une quantité efficace pour contrôler la maladie du blé provoquée par stagonospora nodorum.
